# EUROPÄISCHE PATENTANMELDUNG

(11) **EP 1 772 400 A1**
(43) Veröffentlichungstag der Anmeldung: **11.04.2007**
(21) Anmeldenummer: 06405417.4
(22) Anmeldetag: 03.10.2006
(51) Int. Cl.: B65G 1/04

(54) **Lastaufnahmevorrichtung mit Teleskoparmen mit verstellbaren Mitnehmern**

(30) Priorität: 06.10.2005 CH 16122005
(71) Anmelder: Stöcklin Logistik AG, 4143 Dornach (CH)
(72) Erfinder: Poutet, Jean-Claude, 79539 Lörrach (DE)
(74) Vertreter: Bollhalder, Renato

(57) **Zusammenfassung**

Eine Lastaufnahmevorrichtung (1) umfasst zwei parallel ausfahrbare Teleskoparme (2, 3), die jeweils ein Tragteil (21, 31), ein gegenüber dem Tragteil verschiebbares Mittelteil (22, 32) und ein gegenüber dem Mittelteil verschiebbares Innenteil (23, 33) aufweisen. An den Innenteilen sind jeweils drei Mitnehmer (232, 233, 332, 333) angeordnet, wobei die Mitnehmer der beiden Innenteile einander gegenüberliegen und jeweils in Richtung des gegenüberliegenden Mitnehmers verstellbar sind. Die Verstellung der Mitnehmer jedes Innenteils erfolgt jeweils mittels eines bezüglich des zugehörigen Tragteils ortsfesten Stellmotors. Der Stellmotor weist ein Stellglied auf, das über Zwischenglieder mechanisch derart an die Mitnehmer gekoppelt ist, dass bei einem Aus- oder Einfahren der Teleskoparme ohne Verstellung des Stellglieds die Mitnehmer nicht in Richtung der gegenüberliegenden Mitnehmer verstellt werden. Dadurch, dass der Stellmotor für die Mitnehmer eines Teleskoparms ortsfest bezüglich des Tragteils dieses Teleskoparms und nicht am Innenteil angeordnet ist, kann auf eine Stromzuführung zum Innenteil verzichtet werden.

## Beschreibung

Die vorliegende Erfindung bezieht sich auf eine Lastaufnahmevorrichtung gemäss dem Oberbegriff des unabhängigen Anspruchs 1.

Lastaufnahmevorrichtungen mit zwei parallel ausfahrbaren Teleskoparmen, die jeweils ein Tragteil, ein gegenüber dem Tragteil verschiebbares Mittelteil und ein gegenüber dem Mittelteil verschiebbares Innenteil aufweisen, werden beispielsweise in Regalbediengeräten zum Ein- und Auslagern von gefüllten oder leeren Ladehilfsmitteln, insbesondere Behältern aus Karton oder Kunststoff, in Hochregallager bzw. aus Hochregallagern verwendet. Hierzu sind an den Innenteilen üblicherweise Mitnehmer angeordnet, wobei die Mitnehmer der beiden Innenteile einander gegenüberliegen und jeweils in Richtung des gegenüberliegenden Mitnehmers verstellbar sind, was das Erfassen bzw. Freigeben der Ladehilfsmittel ermöglicht.

Eine Lastaufnahmevorrichtung dieser Art ist beispielsweise in der AT 007 107 U1 offenbart. Bei dieser Lastaufnahmevorrichtung wird jeder Mitnehmer mit einem eigenen Stellmotor verstellt, der am Innenteil angebracht ist. Dies hat den Nachteil, dass dem beweglichen Innenteil Strom für die Stellmotoren zugeführt werden muss. Ausserdem werden eine Vielzahl von Stellmotoren und Sensoren benötigt.

Aus der EP 0 647 575 A1 sind Lastaufnahmevorrichtungen bekannt, bei denen die Verstellung des Mitnehmers jedes Innenteils jeweils mittels eines bezüglich des zugehörigen Tragteils ortsfesten Stellmotors erfolgt. Der Stellmotor weist ein Stellglied auf, das über Zwischenglieder mechanisch derart an den Mitnehmer gekoppelt ist, dass bei einem Ausoder Einfahren der Teleskoparme ohne Verstellung des Stellglieds der Mitnehmer nicht in Richtung des gegenüberliegenden Mitnehmers verstellt wird. Ein Nachteil dieser Lastaufnahmevorrichtungen ist jedoch, dass wegen der speziellen Kopplung der Stellglieder an die zugehörigen Mitnehmer das Ausfahren der Teleskoparme zusätzlich eingeschränkt wird, so dass sie nur für einfachtiefe Einlagerungen geeignet sind.

Angesichts der Nachteile der bisher bekannten, oben erwähnten Lastaufnahmevorrichtungen liegt der Erfindung die folgende Aufgabe zugrunde. Zu schaffen ist eine Lastaufnahmevorrichtung der eingangs erwähnten Art, bei der die Mitnehmer ohne Stromzuführung zu den Innenteilen der Teleskoparme verstellbar sind, wobei die Verstelleinrichtungen für die Mitnehmer die Ausfahrbarkeit der Teleskoparme nicht einschränken sollen und die Anzahl der Stellmotoren für die Mitnehmer und allfälligen Sensoren vergleichsweise klein sein soll.

Diese Aufgabe wird gelöst durch die erfindungsgemässe Lastaufnahmevorrichtung, wie sie im unabhängigen Anspruch 1 definiert ist. Bevorzugte Ausführungsvarianten ergeben sich aus den abhängigen Ansprüchen.

Das Wesen der Erfindung besteht im Folgenden: Eine Lastaufnahmevorrichtung umfasst zwei parallel ausfahrbare Teleskoparme, die jeweils ein Tragteil, ein gegenüber dem Tragteil verschiebbares Mittelteil und ein gegenüber dem Mittelteil verschiebbares Innenteil aufweisen. An den Innenteilen ist jeweils mindestens ein Mitnehmer angeordnet, wobei die Mitnehmer der beiden Innenteile einander gegenüberliegen und jeweils in Richtung des gegenüberliegenden Mitnehmers verstellbar sind. Die Verstellung des mindestens einen Mitnehmers jedes Innenteils erfolgt jeweils mittels eines bezüglich des zugehörigen Tragteils ortsfesten Stellmotors. Der Stellmotor weist ein Stellglied auf, das über Zwischenglieder mechanisch derart an den mindestens einen Mitnehmer gekoppelt ist, dass bei einem Aus- oder Einfahren der Teleskoparme ohne Verstellung des Stellglieds der mindestens eine Mitnehmer nicht in Richtung des gegenüberliegenden Mitnehmers verstellt wird. Mit dem Stellglied ist eine am Tragteil verschiebbar gelagerte Verstell-Zahnstange verschiebbar, die in ein Antriebstrum eines Zahnriemens oder einer Kette eingreift, der bzw. die um zwei drehbar am Mittelteil angebrachte Umlenkräder geführt ist. Ein dem Antriebstrum gegenüberliegendes Verstelltrum des Zahnriemens bzw. der Kette greift in eine Mitnehmer-Zahnstange ein, die am Innenteil verschiebbar gelagert ist, wobei durch eine Verschiebung der Mitnehmer-Zahnstange relativ zum Innenteil der mindestens eine am Innenteil angeordnete Mitnehmer in Richtung des gegenüberliegenden Mitnehmers verstellbar ist.

Bei der erfindungsgemässen Lastaufnahmevorrichtung können die Mitnehmer unabhängig vom Aus- oder Einfahren der Teleskoparme jeweils in Richtung des gegenüberliegenden Mitnehmers verstellt werden, d.h. auf den gegenüberliegenden Mitnehmer zu oder von diesem weg. Die Bewegung des Innenteils beim Aus- bzw. Einfahren des Teleskoparms wird durch den beschriebenen Aufbau für die Betätigung des mindestens einen Mitnehmers neutralisiert. Die Verstelleinrichtungen für die Mitnehmer schränken die Ausfahrbarkeit der Teleskoparme nicht ein. Dadurch, dass der Stellmotor für die Mitnehmer eines Teleskoparms ortsfest bezüglich des Tragteils dieses Teleskoparms und nicht am Innenteil angeordnet ist, kann auf eine Stromzuführung zum Innenteil verzichtet werden. Ausserdem kann die Anzahl der Stellmotoren vergleichsweise gering gehalten werden.

Vorteilhafterweise sind die Mitnehmer jeweils schwenkbar an einem der Innenteile angeordnet. Bevorzugt weisen sie an einem zylindrischen Basisteil eine Spiralnut auf, in die ein an der Mitnehmer-Zahnstange angeordneter Mitnehmer-Stift eingreift. Dadurch können die Innenteile relativ schmal gehalten werden, was das Ein- und Auslagern vergleichsweise breiter Ladehilfsmittel ermöglicht.

Bei einer vorteilhaften Ausführungsvariante sind an jedem der beiden Innenteile mindestens zwei Mitnehmer angeordnet, die mit demselben Stellmotor verstellbar sind. Durch das Vorhandensein von mindestens zwei Mitnehmern an jedem der beiden Teleskoparme können gleichzeitig zwei Ladehilfsmittel ein- bzw. ausgelagert werden. Dadurch, dass die Mitnehmer eines Teleskoparms durch einen gemeinsamen Stellmotor angetrieben werden, werden im Vergleich zum Stand der Technik weniger Stellmotoren benötigt.

Vorzugsweise sind am Mittelteil mindestens zwei Führungsrollen drehbar gelagert, die hintereinander kreuzweise angeordnet sind und am Tragteil anliegen, so dass sie für das Mittelteil eine Kreuzführung bilden. Eine solche Kreuzführung sorgt für eine sichere und präzise Führung des Mittelteils.

Mit Vorteil liegen jeweils mindestens zwei der Führungsrollen am Innenteil an, so dass sie für das Innenteil eine Kreuzführung bilden. Eine solche Kreuzführung sorgt für eine sichere und präzise Führung des Innenteils.

Bei einer bevorzugten Ausführungsvariante sind die beiden Teleskoparme an einem gemeinsamen Träger angebracht, wobei das Tragteil eines ersten der beiden Teleskoparme bezüglich des Trägers ortsfest ist und das Tragteil des zweiten der beiden Teleskoparme bezüglich des Trägers in Richtung des Tragteils des ersten Teleskoparms verstellbar ist, d.h. auf dieses Tragteil zu bzw. von diesem weg.

Durch die Verstellung des Abstands der beiden Teleskoparme findet eine Anpassung an unterschiedlich breite Ladehilfsmittel statt. Dadurch, dass nur einer der beiden Teleskoparme verstellt wird, können bei einer doppeltief Ein- bzw. Auslagerung gleichzeitig zwei unterschiedlich breite Ladehilfsmittel ein- bzw. ausgelagert werden, da der ortsfeste Teleskoparm eine gemeinsame Referenzlinie definiert. Ausserdem braucht nur einer der beiden Teleskoparme verstellbar befestigt zu werden.

Mit Vorteil weist die Lastaufnahmevorrichtung zwischen den beiden Teleskoparmen mindestens zwei in Längsrichtung der Teleskoparme hintereinander angeordnete Förderbänder auf, die in Längsrichtung der Teleskoparme fördern und separat antreibbar sind. Dies ermöglicht ein voneinander unabhängiges Längsverschieben von zwei hintereinander geladenen Ladehilfsmitteln.

Vorzugsweise ist zwischen den beiden Teleskoparmen in Längsrichtung der Teleskoparme eine Rollenbahn angeordnet. Eine solche Rollenbahn stützt die Ladehilfsmittel zwischen den beiden Teleskoparmen.

Bei einer vorteilhaften Ausführungsvariante ist die Rollenbahn quer zu den Teleskoparmen verschiebbar, wobei die Verschiebung vorzugsweise so an die Verstellung des gegenseitigen Abstands der beiden Teleskoparme gekoppelt ist, dass die Rollenbahn immer in der Mitte zwischen den beiden Teleskoparmen ist. Die Rollenbahn sorgt so auch bei einer Querverstellung des einen Teleskoparms oder beider Teleskoparme für eine optimale Stützung der Ladehilfsmittel.

Vorzugsweise sind beidseits der Rollenbahn je zwei in Längsrichtung der Teleskoparme hintereinander angeordnete Förderbänder angeordnet, wobei die beiden vorderen Förderbänder und die beiden hinteren Förderbänder jeweils mit einem gemeinsamen Förderband-Motor antreibbar sind. Die Förderbänder ermöglichen ein voneinander unabhängiges Längsverschieben von zwei hintereinander geladenen Ladehilfsmitteln. Die beiden gemeinsamen Förderband-Motoren sorgen für ein synchrones Fördern der jeweils zusammenwirkenden Förderbänder.

Im Folgenden wird die erfindungsgemässe Lastaufnahmevorrichtung unter Bezugnahme auf die beigefügten Zeichnungen anhand eines Ausführungsbeispiels detaillierter beschrieben. Es zeigen:

Fig. 1 - schematisch eine Draufsicht auf ein Lagersystem mit einem Hochregallager und einem Regalbediengerät mit Lastaufnahmevorrichtung in einer Regalgasse;

Fig. 2 - das Lagersystem von Fig. 1, wobei zwei Teleskoparme der Lastaufnahmevorrichtung doppeltief ausgefahren sind;

Fig. 3 - das Lagersystem von Fig. 1, wobei die Teleskoparme einfachtief ausgefahren sind und der eine Teleskoparm zum andern hin verschoben ist;

Fig. 4 - schematisch in einer Seitenansicht den Aus- und Einfahrmechanismus eines Teleskoparms;

Fig. 5 - einen Teil des Aus- und Einfahrmechanismus von Fig. 4;

Fig. 6 - einen anderen Teil des Aus- und Einfahrmechanismus von Fig. 4;

Fig. 7 - schematisch in einer Schnittansicht den Antrieb des Aus- und Einfahrmechanismus der Teleskoparme;

Fig. 8 - schematisch in einer Schnittansicht den Antrieb von Förderbändern der Lastaufnahmevorrichtung;

Fig. 9 - schematisch in einer Schnittansicht den Mechanismus zur Querverstellung eines der beiden Teleskoparme;

Fig. 10 - schematisch in einer Schnittansicht den Mechanismus zur Querverstellung einer Rollenbahn der Lastaufnahmevorrichtung;

Fig. 11 - eine schematische Ansicht eines Querschnitts eines der Teleskoparme an einer ersten Stelle;

Fig. 12 - eine schematische Ansicht eines Querschnitts des Teleskoparms von Fig. 11 an einer zweiten Stelle;

Fig. 13 - einen aus einem ersten Ende eines Innenteils des Teleskoparms von Fig. 11 herausgeklappten Mitnehmer mit einem Teil eines Verstellmechanismus;

Fig. 14 - eine Draufsicht auf den Mitnehmer von Fig. 13;

Fig. 15 - schematisch in einer Seitenansicht den Mechanismus zur Verstellung von Mitnehmern der Teleskoparme;

Fig. 16 - eine Draufsicht auf einen Mitnehmer des zweiten Endes des Innenteils des Teleskoparms von Fig. 11; und

Fig. 17 - eine Draufsicht auf einen Mitnehmer der Mitte des Innenteils des Teleskoparms von Fig. 11.

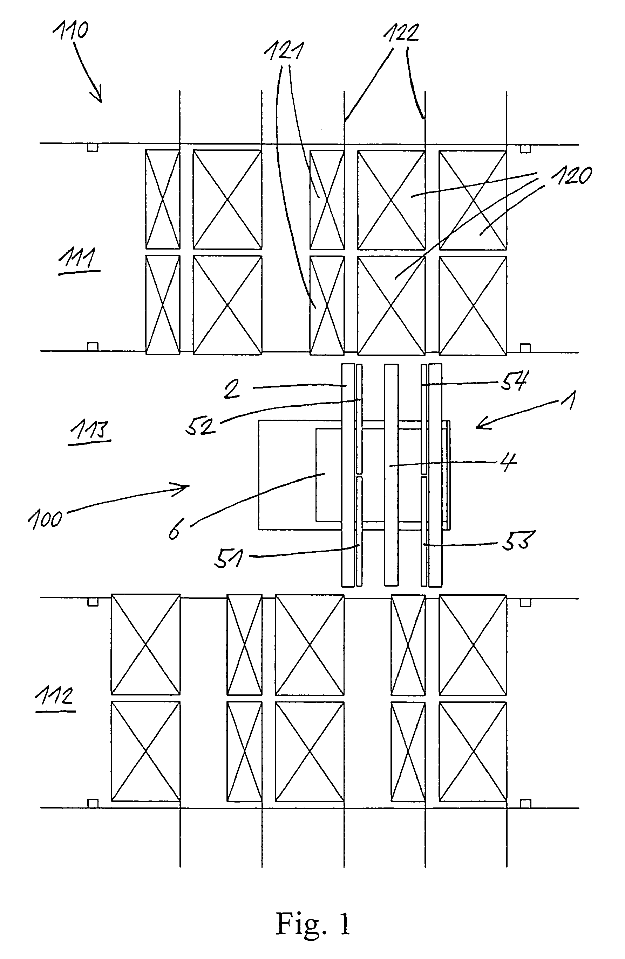

In Fig. 1 ist ein Lagersystem mit einem Hochregallager 110 dargestellt, von dem beidseits einer Regalgasse 113 jeweils ein Teil einer doppeltiefen Regalreihe 111 bzw. 112 sichtbar ist. Jede Regalreihe 111, 112 umfasst mehrere übereinander angeordnete Regale mit jeweils einer vorderen Reihe von Abstellplätzen und einer hinteren Reihe von Abstellplätzen, auf denen hier breite Ladehilfsmittel 120 und schmale Ladehilfsmittel 121 gelagert sind. Die eine Seite zweier hintereinander gelagerter Ladehilfsmittel 120, 121 liegt jeweils auf einer gemeinsamen Referenzlinie 122. Der Abstand zweier benachbarter Referenzlinien 122 ist über das ganze Hochregallager 110 hinweg immer derselbe, unabhängig davon, ob breite Ladehilfsmittel 120 oder schmale Ladehilfsmittel 121 gelagert werden. Die Ladehilfsmittel 120, 121, beispielsweise Behälter aus Karton oder Kunststoff, sind normalerweise mit Nutzwaren gefüllt, können aber auch leer sein.

In der Regalgasse 113 befindet sich ein Regalbediengerät 100, das eine Lastaufnahmevorrichtung 1 umfasst, die in bekannter Weise höhenverstellbar ist. Wir verweisen diesbezüglich auf die DE 202 10 214 U1, in der ein Regalbediengerät mit einer herkömmlichen höhenverstellbaren Lastaufnahmevorrichtung offenbart ist.

Die vorliegende Lastaufnahmevorrichtung 1 umfasst einen Träger 6 , der zwei parallele Teleskoparme 2 und 3 und in der Mitte zwischen diesen eine Rollenbahn 4 trägt. Beidseits der Rollenbahn 4 sind je zwei in Längsrichtung der Teleskoparme 2, 3 hintereinander angeordnete, in diese Richtung fördernde Förderbänder 51, 52, 53 und 54 angeordnet.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

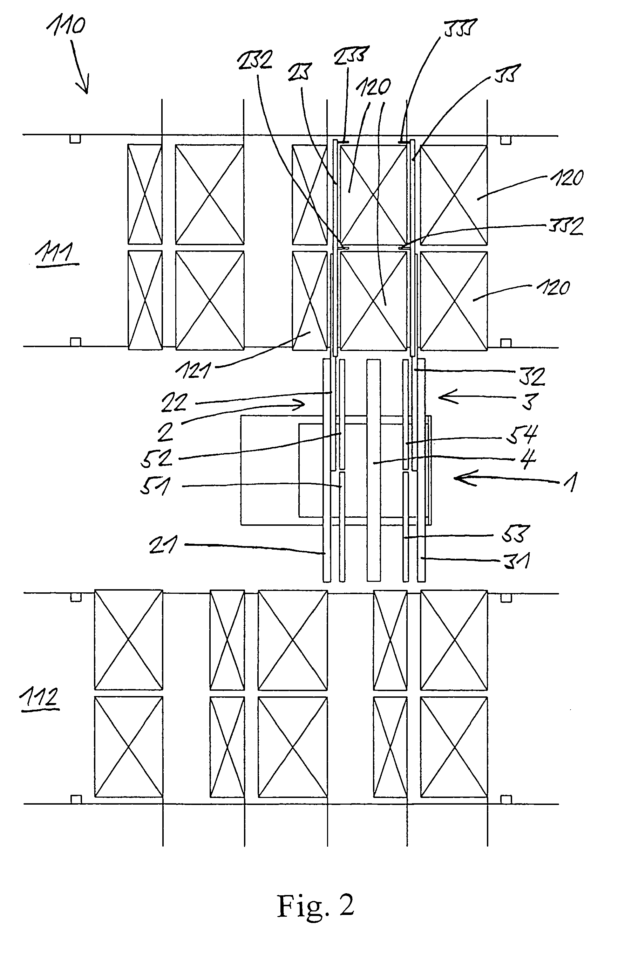

Fig. 2 entspricht weitgehend Fig. 1, ausser dass die beiden Teleskoparme, 2, 3 der Lastaufnahmevorrichtung 1 vollständig in eine Richtung ausgefahren sind, nämlich doppeltief in die Regalreihe 111 hinein, in die Lücken zwischen benachbarten Ladehilfsmittels 120, 121. Es ist ersichtlich, dass die Teleskoparme 2, 3 jeweils drei Hauptteile umfassen, nämlich ein in Ausfahrrichtung ortsfestes, am Träger 6 befestigtes Tragteil 21 bzw. 31, ein gegenüber dem Tragteil 21, 31 verschiebbares Mittelteil 22 bzw. 32 und ein gegenüber dem Mittelteil 22, 32 verschiebbares Innenteil 23 bzw. 33.

Am einen Ende und in der Mitte des Innenteils 23 des Teleskoparms 2 ist jeweils ein Mitnehmer 233 bzw. 232 in Richtung des Innenteils 33 des Teleskoparms 3 ausgeklappt. Ein dritter Mitnehmer ist am anderen Ende des Innenteils 23 angebracht, aber in Fig. 2 nicht sichtbar, da er nicht ausgeklappt ist. Entsprechend ist am einen Ende und in der Mitte des Innenteils 33 des Teleskoparms 3 jeweils ein Mitnehmer 333 bzw. 332 in Richtung des gegenüberliegenden Mitnehmers 233 bzw. 232 des Innenteils 23 des Teleskoparms 2 ausgeklappt. Auch beim Teleskoparm 3 ist am anderen Ende des Innenteils 33 ein dritter Mitnehmer angebracht, der in Fig. 2 nicht sichtbar ist, da er nicht ausgeklappt ist. Insgesamt ist also jeder Teleskoparm 2, 3 mit drei Mitnehmern versehen.

Im in Fig. 2 dargestellten Fall hintergreifen die Mitnehmer 232, 233, 332 und 333 zwei hintereinander angeordnete Ladehilfsmittel 120 einzeln. Die beiden Ladehilfsmittel 120 können so durch Einfahren der Teleskoparme 2, 3 auf die Förderbänder 51, 52, 53, 54 und die Rollenbahn 4 gezogen werden, ohne dass sie gegenseitig in Berührung kommen.

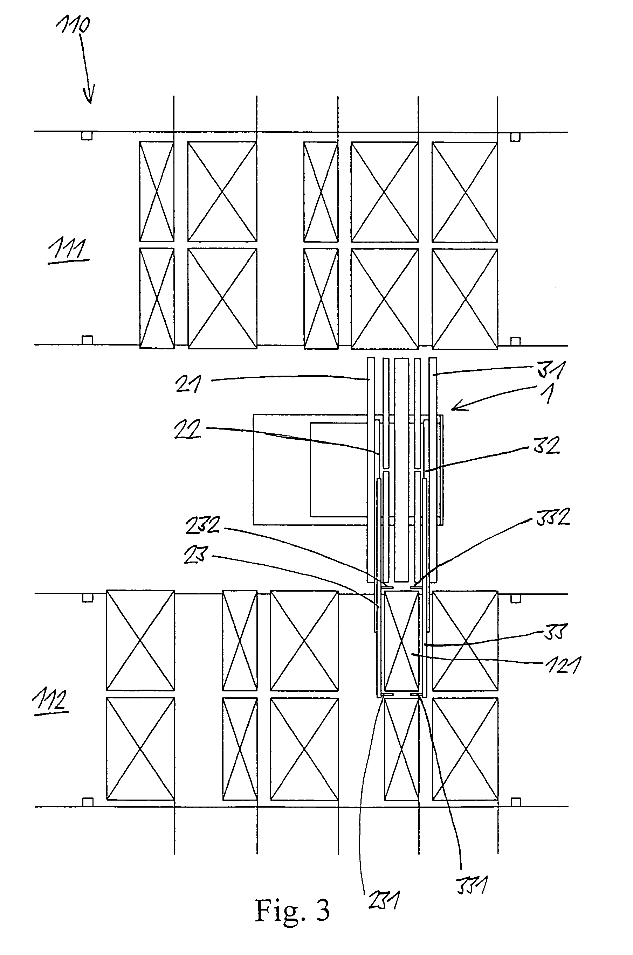

In Fig. 3 sind die Teleskoparme 2, 3 im Vergleich zu Fig. 2 in die Gegenrichtung ausgefahren, und zwar diesmal nur einfachtief in die Regalreihe 112 hinein. Da das dort gelagerte Ladehilfsmittel 121 viel schmaler als die Ladehilfsmittel 120 ist, ist der Teleskoparm 2 zum Teleskoparm 3 hin verschoben worden. Im vorliegenden Fall sind sowohl die mittleren Mitnehmer 232, 332 ausgeklappt als auch die in Fig. 2 nicht sichtbaren Mitnehmer 231 und 331 am Ende des Teleskoparms 2 bzw. 3, dafür sind die Mitnehmer 233, 333 eingeklappt und daher nicht sichtbar. Das Ladehilfsmittel 121 könnte durch die ausgeklappten Mitnehmer 231, 331 auf den gassennäheren Abstellplatz geschoben worden sein und/oder kann nun durch die ausgeklappten Mitnehmer 231, 331 auf die Förderbänder 51, 52, 53, 54 und die Rollenbahn 4 gezogen werden.

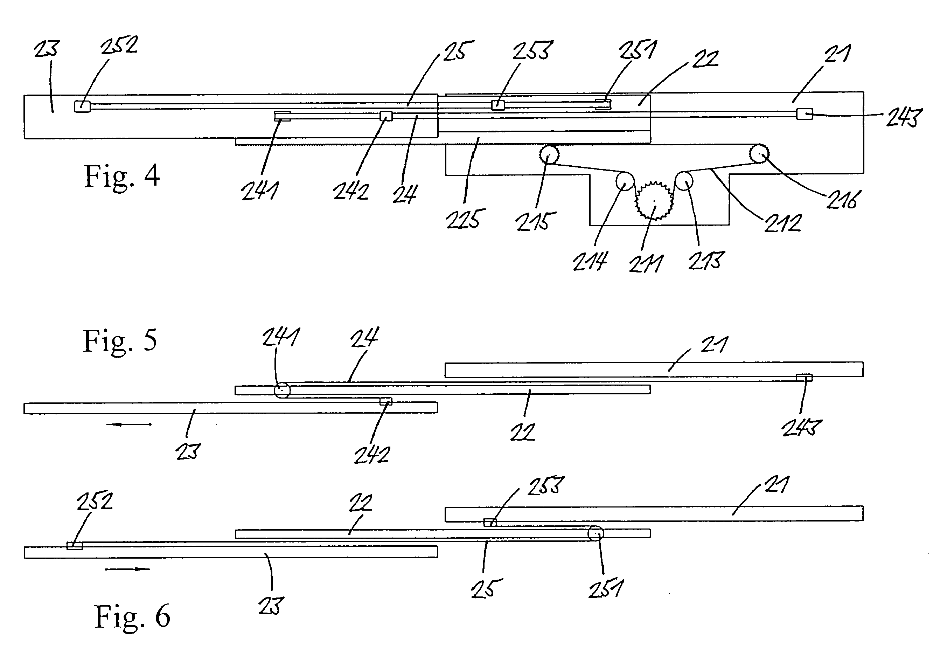

Der Aus- und Einfahrmechanismus des Teleskoparms 2 ist in den Fig. 4-6 schematisch dargestellt. Derjenige des Teleskoparms 3 ist analog.

Aus Fig. 4 ist ersichtlich, dass am Tragteil 21 des Teleskoparms 2 ein Antriebsrad 211 angeordnet ist, mit dem ein endloser Zahnriemen 212 (oder alternativ eine Kette) angetrieben wird. Der Zahnriemen 212 läuft um Umlenkräder 213, 214 und 215, ein Spannrad 216, sowie das Antriebsrad 211. Das Spannrad 216 ist verschiebbar gelagert, so dass der Zahnriemen 212 durch Verschieben des Spannrads 216 spannbar ist.

Der Zahnriemen 212 greift in eine Mittelteil-Zahnstange 225 ein, die fest mit dem Rest des Mittelteils 22 verbunden ist. Dadurch wird bei einem Drehen des Antriebsrads 211 das Mittelteil 22 über den Zahnriemen 212 und die Mittelteil-Zahnstange 225 bezüglich des Tragteils 21 verschoben, d.h. aus- oder eingefahren.

Um gleichzeitig das Innenteil 23 bezüglich des Mittelteils 22 um das gleiche Ausmass zu verschieben, ist das Innenteil 23 über zwei Riemen 24 und 25 mit dem Tragteil 21 verbunden. Die beiden Enden des Riemens 24 sind mittels Riemenklemmelementen 242 und 243 am rechten Endbereich des Innenteils 23 bzw. des Tragteils 21 befestigt und der Riemen 24 ist um ein Umlenkrad 241 im linken Endbereich des Mittelteils 22 geführt, wie am besten aus Fig. 5 ersichtlich. Die beiden Enden des Riemens 25 sind mittels Riemenklemmelementen 252 und 253 am linken Endbereich des Innenteils 23 bzw. des Tragteils 21 befestigt und der Riemen 25 ist um ein Umlenkrad 251 im linken Endbereich des Mittelteils 22 geführt, wie am besten aus Fig. 6 ersichtlich. Dadurch wird bei einem Verschieben des Mittelteils 22 um ein bestimmtes Ausmass nach links aufgrund des Riemens 24 das Innenteil 23 bezüglich des Mittelteils 22 noch zusätzlich um dasselbe Ausmass weiter nach links verschoben. Bei einem Verschieben des Mittelteils 22 um ein bestimmtes Ausmass nach rechts wird aufgrund des Riemens 25 das Innenteil 23 bezüglich des Mittelteils 22 noch zusätzlich um dasselbe Ausmass weiter nach rechts verschoben.

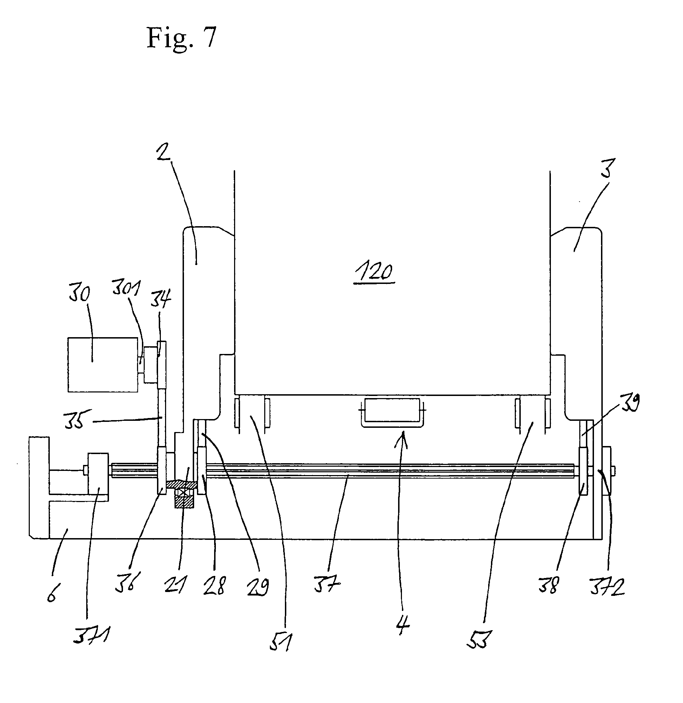

Der Antrieb des Antriebsrads 211 des Teleskoparms 2 und des entsprechenden Antriebsrads des Teleskoparms 3 erfolgt mittels eines Teleskop-Motors 30, wie in Fig. 7 schematisch dargestellt. Der Teleskop-Motor 30 weist eine Motorwelle 301 auf, auf der ein Zahnrad 34 angebracht ist. Das Zahnrad 34 treibt über einen umlaufenden Zahnriemen 35 (oder alternativ eine Kette) ein Zahnrad 36 an, durch das eine Keilwelle 37 geführt ist, die mitgedreht wird. Die Keilwelle 37 ihrerseits dreht auf ihr angebrachte Zahnräder 28 und 29 mit, die über Zahnriemen 29 bzw. 39 (oder alternativ Ketten) das Antriebsrad 211 des Teleskoparms 2 bzw. das entsprechende Antriebsrad des Teleskoparms 3 antreiben.

Die Lagerung der Keilwelle 37 erfolgt über Lagerelemente 371 und 372, die am Träger 6 angebracht sind. Da der Teleskoparm 2 in Richtung des Teleskoparms 3 querverschiebbar ist, sind das Tragteil 21 und das Zahnrad 28 bezüglich der Keilwelle 37 verschiebbar montiert. Dasselbe trifft hier auch auf das Zahnrad 36 zu, so dass der Zahnriemen 35, das Zahnrad 34 und der Teleskop-Motor 30 mitverschoben werden können. Alternativ könnten diese Elemente auch in Querrichtung stationär montiert werden.

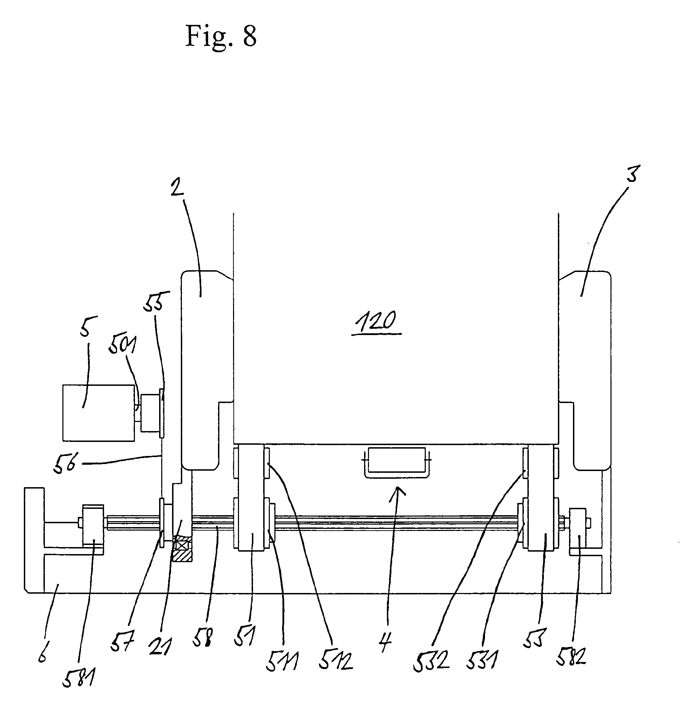

Wie aus Fig. 8 ersichtlich, erfolgt der Antrieb der Förderbänder 51 und 53 prinzipiell ähnlich wie der Antrieb der Antriebsräder der Teleskoparme 2, 3. Die beiden Förderbänder 51 und 53, die um Antriebsräder 511 bzw. 531 und um Umlenkräder 512 bzw. 532 geführt sind, werden gemeinsam mit einem Förderband-Motor 5 angetrieben. Entsprechendes gilt für die beiden Förderbänder 52 und 54, die in Fig. 8 nicht dargestellt sind.

Der Förderband-Motor 5 weist eine Motorwelle 501 auf, auf der ein Zahnrad 55 angebracht ist. Das Zahnrad 55 treibt über einen umlaufenden Zahnriemen 56 (oder alternativ eine Kette) ein Zahnrad 57 an, durch das eine Keilwelle 58 geführt ist, die mitgedreht wird. Die Keilwelle 58 ihrerseits dreht die auf ihr angebrachten Antriebsräder 511 und 531 mit, die die Förderbänder 51 bzw. 53 antreiben.

Die Lagerung der Keilwelle 58 erfolgt über Lagerelemente 581 und 582, die am Träger 6 angebracht sind. Da der Teleskoparm 2 in Richtung des Teleskoparms 3 querverschiebbar ist, sind das Tragteil 21 und das Antriebsrad 511 bezüglich der Keilwelle 58 verschiebbar montiert. Dasselbe trifft hier auch auf das Zahnrad 57 zu, so dass der Zahnriemen 56, das Zahnrad 55 und der Teleskop-Motor 5 mitverschoben werden können. Alternativ könnten diese Elemente auch in Querrichtung stationär montiert werden.

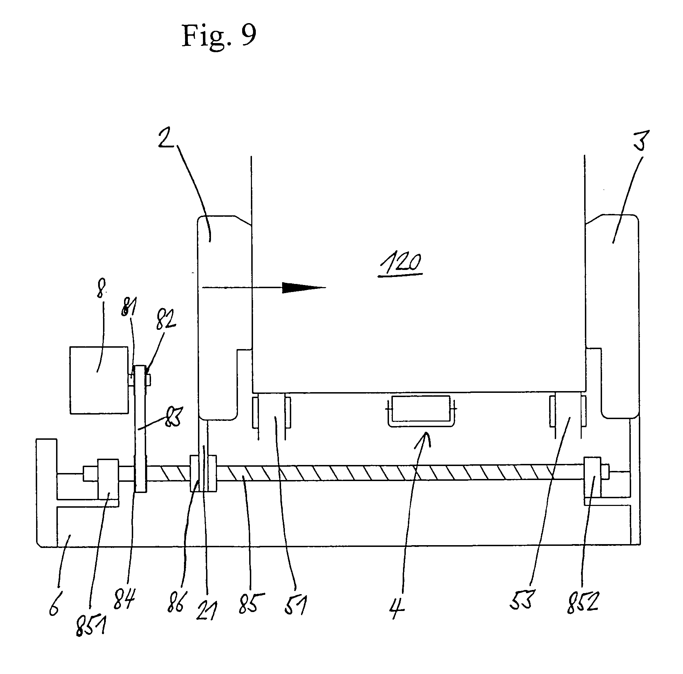

Der Mechanismus zur Querverstellung des Teleskoparms 2 in Richtung des Teleskoparms 3 ist in Fig. 9 dargestellt. Die Querverstellung erfolgt mittels eines Querverstellungsmotors 8, der eine Motorwelle 81 aufweist, auf der ein Antriebsrad 82 angebracht ist. Das Antriebsrad 82 treibt über einen umlaufenden Riemen 83 (oder alternativ eine Kette) ein Antriebsrad 84 an, das fest mit einer Spindel 85 verbunden ist, die mitgedreht wird. Die Spindel 85 ist durch eine Mitnehmereinheit 86 geführt, die fest mit dem Tragteil 21 des Teleskoparms 2 verbunden ist. Bei einem Drehen der Spindel 85 wird diese mutterartige Mitnehmereinheit 86 auf der Spindel 85 verschoben und verstellt so den Teleskoparm 2 in Querrichtung. Die Spindel 85 ist in Lagerelementen 851 und 852 gelagert, die am Träger 6 angebracht sind.

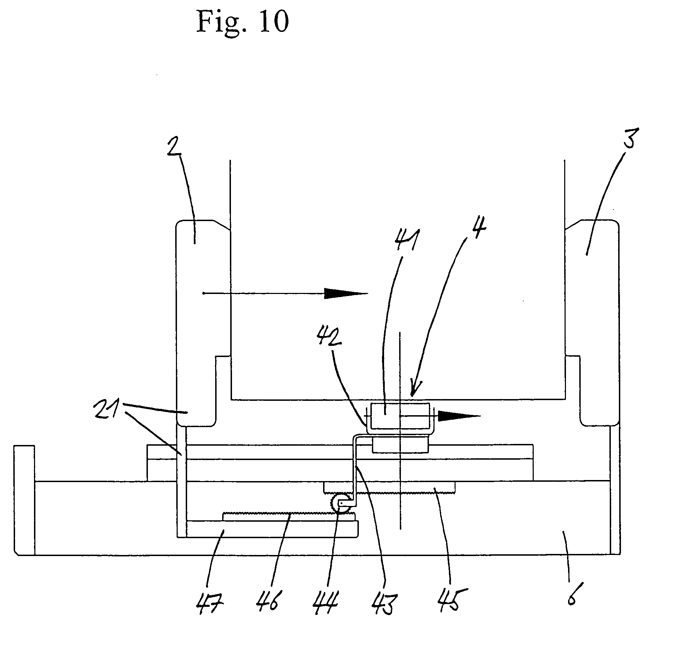

Fig. 10 zeigt den Mechanismus zur Querverstellung der Rollenbahn 4 der Lastaufnahmevorrichtung 1. Die Rollenbahn 4 umfasst eine Vielzahl von Rollen 41, die in einem Rollenrahmen 42 gelagert sind. An der Unterseite des Rollenrahmens 42 ist ein winkelförmiger Mitnehmer 43 angebracht, an dessen freiem Ende ein Mitnehmerzahnrad 44 drehbar gelagert ist. Das Mitnehmerzahnrad 44 greift einerseits in eine ortsfeste Zahnstange 45 ein, die am Träger 6 befestigt ist, und anderseits in eine Teleskop-Zahnstange 46, die über eine Verbindungsstange 47 mit dem Tragteil 21 des Teleskoparms 2 fest verbunden ist. Wird nun der Teleskoparm 2 in Querrichtung beispielsweise nach rechts verschoben, wird die Querbewegung über die Teleskop-Zahnstange 46 auf das Mitnehmerzahnrad 44 übertragen und dieses rollt auf der ortsfesten Zahnstange 45 nach rechts und auf der Teleskop-Zahnstange 46 nach links ab. Dadurch wird erreicht, dass die Rollenbahn 4 genau halb so weit verschoben wird wie der Teleskoparm 2. Sie verbleibt somit immer in der Mitte zwischen den beiden Teleskoparmen 2, 3 und kann so die Ladehilfsmittel optimal stützen.

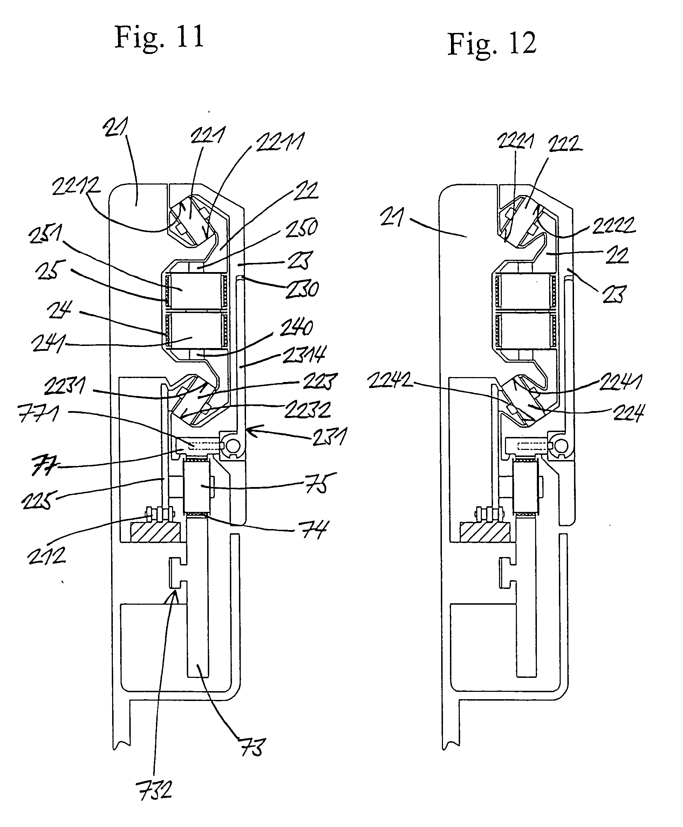

Die Fig. 11 und 12 zeigen schematisch zwei Querschnitte des Teleskoparms 2 an verschiedenen Stellen, aus denen ersichtlich ist, wie das Mittelteil 22 am Tragteil 21 und das Innenteil 23 am Mittelteil 22 geführt sind. Zum Zwecke der Führung sind oben am Mittelteil 22 am Anfang und am Ende des Mittelteils 22 jeweils zwei Führungsrollen 221 (Fig. 11) und 222 (Fig. 12) drehbar gelagert, die hintereinander kreuzweise angeordnet sind. Jede Führungsrolle 221 liegt an einer Schrägfläche 2211 des Tragteils 21 und an einer Schrägfläche 2212 des Innenteils 23 an, während jede Führungsrolle 222 an einer Schrägfläche 2221 des Tragteils 21 und an einer Schrägfläche 2222 des Innenteils 23 anliegt. Jedes Führungsrollenpaar 221, 222 bildet somit eine Kreuzführung. Entsprechend sind unten am Mittelteil 22 am Anfang und am Ende des Mittelteils 22 jeweils zwei Führungsrollen 223 (Fig. 11) und 224 (Fig. 12) drehbar gelagert, die hintereinander kreuzweise angeordnet sind. Jede Führungsrolle 223 liegt an einer Schrägfläche 2231 des Tragteils 21 und an einer Schrägfläche 2232 des Innenteils 23 an, während jede Führungsrolle 224 an einer Schrägfläche 2241 des Tragteils 21 und an einer Schrägfläche 2242 des Innenteils 23 anliegt. Jedes Führungsrollenpaar 223, 224 bildet somit eine Kreuzführung.

In Fig. 11 - und im Übrigen auch in Fig. 12, die bis auf die erwähnten Führungsrollen und Schrägflächen der Fig. 11 entspricht und daher nicht noch separat im Detail beschrieben wird - sind im Weiteren die Umlenkräder 241, 251 des Aus- und Einfahrmechanismus des Teleskoparms 2 erkennbar, die unabhängig voneinander über Achsen 240 bzw. 250 am Mittelteil 22 gelagert sind. Um die Umlenkräder 241, 251 sind parallel zueinander die Riemen 24 und 25 geführt. Ebenfalls am Mittelteil 22 angeordnet ist die Mittelteil-Zahnstange 225, die in den Zahnriemen 212 eingreift und von diesem angetrieben wird.

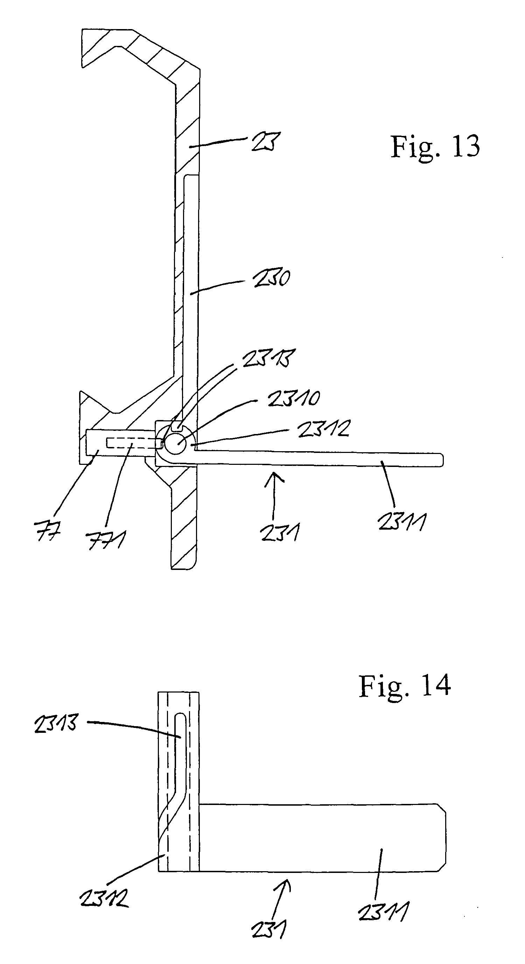

Der Mitnehmer 231 ist in Fig. 11 im eingeklappten Zustand gezeigt, in dem er in eine Ausnehmung 230 des Innenteils 23 geklappt ist und so nicht vom Innenteil 23 vorsteht. Fig. 13 zeigt den Mitnehmer 231 im vom Innenteil 23 ausgeklappten Zustand. Insbesondere aus den Fig. 13 und 14 ist ersichtlich, dass der Mitnehmer 231 einen hohlzylindrischen Basisteil 2312 aufweist, der um eine am Innenteil 23 befestigte Achse 2310 drehbar ist. Vom Basisteil 2312 aus erstreckt sich eine Mitnehmerplatte 2311, die dann im Betrieb in Kontakt mit dem mitzunehmenden Ladehilfsmittel kommt. Um den Mitnehmer 231 um die Achse 2310 zu drehen, ist der Basisteil 2312 mit einer Spiralnut 2313 versehen, die sich längs des Basisteils 2312 über einen Winkel zwischen 70° und 110°, vorzugsweise 90°, erstreckt. In diese Spiralnut 2313 greift ein an einer Mitnehmer-Zahnstange 77 angebrachter Mitnehmer-Stift 771 ein. Bei einem Verschieben der Mitnehmer-Zahnstange 77 bezüglich des Innenteils 23 parallel zur Achse 2310 wird so der Mitnehmer 231 durch den Mitnehmer-Stift 771 in der Spiralnut 2313 zwangsweise um die Achse 2310 gedreht, d.h. je nach Bewegungsrichtung ausgeklappt oder eingeklappt.

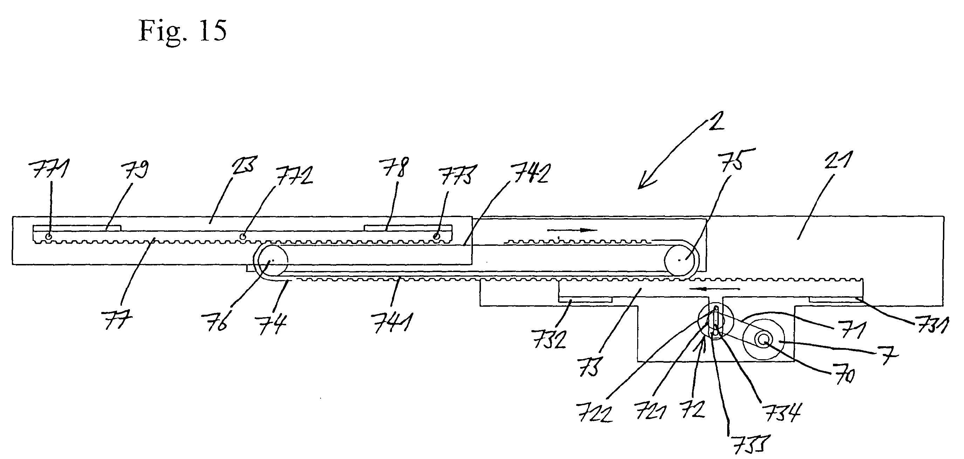

Der Mechanismus zur Verstellung der Mitnehmer-Zahnstange 77 ist in Fig. 15 dargestellt. Als Antrieb für die Verstellung dient ein fest mit dem Tragteil 21 verbundener Stellmotor 7, der ein Stellglied 70 in Form einer Motorwelle mit Antriebsrad aufweist. Das Stellglied 70 ist über einen Riemen 71 mit einem Riemenrad 721 einer Antriebsscheibe 72 verbunden und dreht diese bei Bedarf. Die Antriebsscheibe 72 ist mit einer exzentrisch angeordneten Rolle 722 versehen, die in einen Schlitz 734 in einem nach unten ragenden Fortsatz 733 einer Verstell-Zahnstange 73 ragt. Bei einem Drehen der Antriebsscheibe 72 drückt die Rolle 722 so die Verstell-Zahnstange 73, die durch Führungen 731 und 732 (siehe auch Fig. 11) geführt ist, in die gewünschte Richtung.

Die Verstell-Zahnstange 73 greift in ein Antriebstrum 741 eines Zahnriemens 74 (oder alternativ einer Kette) ein, der um zwei drehbar am Mittelteil 22 angebrachte Umlenkräder 75 und 76 geführt ist (siehe auch Fig. 11). Ein dem Antriebstrum 741 gegenüberliegendes Verstelltrum 742 des Zahnriemens 74 greift in die Mitnehmer-Zahnstange 77 ein, die am Innenteil 23 verschiebbar gelagert und an Führungen 78, 79 geführt ist. So kann durch eine Verschiebung der Verstell-Zahnstange 73 nach links die Mitnehmer-Zahnstange 77 bezüglich des Innenteils 23 nach rechts verschoben werden und umgekehrt. Ausserdem ist sichergestellt, dass bei einem Aus- oder Einfahren des Teleskoparms 2 ohne Verschiebung der Verstell-Zahnstange 73 auch die Mitnehmer-Zahnstange 77 nicht bezüglich des Innenteils 23 verschoben wird, d.h. die Mitnehmer werden nicht ungewollt beim Aus- oder Einfahren des Teleskoparms 2 betätigt. Bei einer Bewegung des Mittelteils 22 um ein bestimmtes Ausmass in eine Richtung wird nämlich aufgrund des Eingreifens des Antriebstrums 741 des Zahnriemens 74 in die stationäre Verstell-Zahnstange 73 das Verstelltrum 742 des Zahnriemens 74 und in der Folge auch die Mitnehmer-Zahnstange 77 um das doppelte Ausmass in dieselbe Richtung verschoben. Da, wie weiter oben erläutert, auch das Innenteil 23 um das im Vergleich zum Mittelteil 22 doppelte Ausmass in dieselbe Richtung verschoben wird, bleibt somit die Position der Mitnehmer-Zahnstange 77 bezüglich des Innenteils 23 konstant.

Neben dem Mitnehmer-Stift 771 für den Mitnehmer 231 ist die Mitnehmer-Zahnstange 77 noch mit Mitnehmer-Stiften 772 und 773 für die Mitnehmer 232 und 233 versehen.

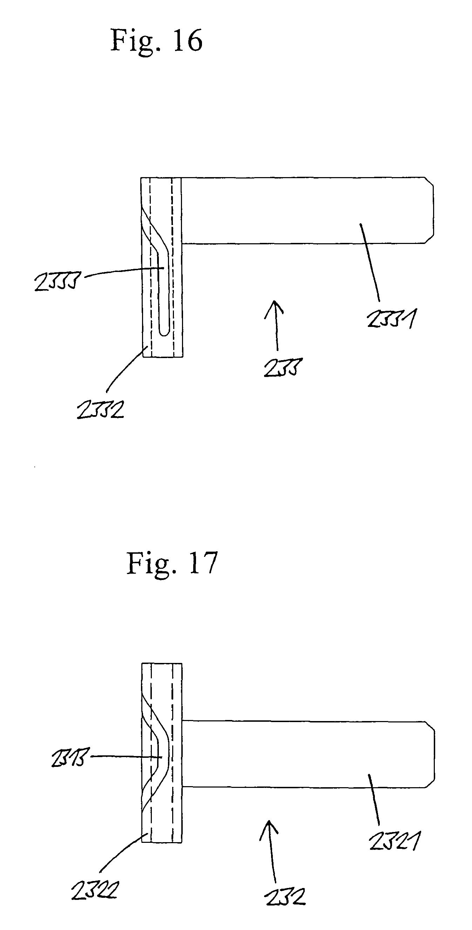

Der Mitnehmer 233 ist in Fig. 16 dargestellt. Er weist einen hohlzylindrischen Basisteil 2332 auf, der um eine am Innenteil 23 befestigte Achse drehbar ist. Vom Basisteil 2332 aus erstreckt sich eine Mitnehmerplatte 2331, die im Betrieb in Kontakt mit dem mitzunehmenden Ladehilfsmittel kommt. Um den Mitnehmer 233 um die Drehachse zu drehen, ist der Basisteil 2332 mit einer Spiralnut 2333 versehen, die sich längs des Basisteils 2332 über einen Winkel zwischen 70° und 110°, vorzugsweise 90°, erstreckt. In diese Spiralnut 2333 greift dann der an der Mitnehmer-Zahnstange 77 angebrachte Mitnehmer-Stift 773 ein.

Der Mitnehmer 232 ist in Fig. 17 dargestellt. Er weist einen hohlzylindrischen Basisteil 2322 auf, der um eine am Innenteil 23 befestigte Achse drehbar ist. Vom Basisteil 2322 aus erstreckt sich eine Mitnehmerplatte 2321, die im Betrieb in Kontakt mit dem mitzunehmenden Ladehilfsmittel kommt. Um den Mitnehmer 232 um die Drehachse zu drehen, ist der Basisteil 2322 mit einer Spiralnut 2323 versehen, die sich längs des Basisteils 2322 über einen Winkel zwischen 70° und 110°, vorzugsweise 90°, erstreckt. In diese Spiralnut 2323 greift dann der an der Mitnehmer-Zahnstange 77 angebrachte Mitnehmer-Stift 772 ein.

Die Mitnehmer 231, 232, 233 unterscheiden sich einerseits durch die Anordnung der Mitnehmerplatten 2311, 2321, 2331 und anderseits durch die Spiralnuten 2313, 2323, 2333. Die Mitnehmerplatten 2311, 2331 bei den beiden äusseren Mitnehmern 231, 233 sind so angeordnet, dass sie sich möglichst weit aussen am Innenteil 23 befinden. Die Mitnehmerplatte 2321 des mittleren Mitnehmers 231 ist in der Mitte angeordnet.

Die Spiralnuten 2313, 2323, 2333 sind so ausgebildet, dass in einer mittleren Position der Mitnehmer-Zahnstange 77 alle Mitnehmer 231, 232, 233 eingeklappt sind. Wird die Mitnehmer-Zahnstange 77 von dieser mittleren Position aus in eine Richtung verschoben, werden beispielsweise die Mitnehmer 231 und 232 ausgeklappt, während der Mitnehmer 233 eingeklappt bleibt. Wird die Mitnehmer-Zahnstange 77 dann wieder zurück in die mittlere Position geschoben, werden die Mitnehmer 231 und 232 wieder eingeklappt Wird die Mitnehmer-Zahnstange 77 demgegenüber von der mittleren Position aus in die Gegenrichtung verschoben, werden die Mitnehmer 233 und 232 ausgeklappt, während der Mitnehmer 231 eingeklappt bleibt. Es werden also immer zwei Mitnehmer gleichzeitig aus- bzw. eingeklappt, wobei alle drei Mitnehmer 231, 232, 233 von demselben Stellmotor 7 verstellt werden.

Der Teleskoparm 3 ist weitgehend spiegelbildlich zum Teleskoparm 2 aufgebaut, bis auf die Elemente zur Querverschiebung des Teleskoparms 2, die beim Teleskoparm 3 fehlen.

Zu den vorbeschriebenen Lastaufnahmevorrichtungen sind weitere konstruktive Variationen realisierbar. Hier ausdrücklich erwähnt sei noch:

-Anstelle einer Mitnehmer-Zahnstange 77 mit Mitnehmer-Stiften 771, 772, 773 und Basisteilen 2312, 2322, 2332 mit Spiralnuten 2313, 2323, 2333 können eine Mitnehmer-Zahnstange und Basisteile mit Schrägverzahnungen verwendet werden, die so ausgebildet sind und ineinander greifen, dass entsprechende Verstellungen der Mitnehmer realisiert werden können.

- Anstatt den Abstand zweier Referenzlinien 122 über das ganze Hochregallager hinweg konstant zu halten, kann dieser auch dynamisch innerhalb einer minimalen und maximalen Breite ausgestaltet werden. Unterschiedlich breite Ladehilfsmittel können so platzsparender gelagert werden, wodurch ein höherer Füllungsgrad des Hochregallagers erzielt werden kann.

## Patentansprüche

1. Lastaufnahmevorrichtung (1) mit zwei parallel ausfahrbaren Teleskoparmen (2, 3), die jeweils ein Tragteil (21, 31), ein gegenüber dem Tragteil (21, 31) verschiebbares Mittelteil (22, 32) und ein gegenüber dem Mittelteil (22, 32) verschiebbares Innenteil (23, 33) aufweisen, wobei an den Innenteilen (23, 33) jeweils mindestens ein Mitnehmer (231, 232, 233, 331, 332, 333) angeordnet ist, die Mitnehmer (231, 232, 233, 331, 332, 333) der beiden Innenteile (23, 33) einander gegenüberliegen und jeweils in Richtung des gegenüberliegenden Mitnehmers (231, 232, 233, 331, 332, 333) verstellbar sind und die Verstellung des mindestens einen Mitnehmers (231, 232, 233, 331, 332, 333) jedes Innenteils (23, 33) jeweils mittels eines bezüglich des zugehörigen Tragteils (21, 31) ortsfesten Stellmotors (7) erfolgt, wobei der Stellmotor (7) ein Stellglied (70) aufweist, das über Zwischenglieder (71, 72, 73, 74, 77) mechanisch derart an den mindestens einen Mitnehmer (231, 232, 233, 331, 332, 333) gekoppelt ist, dass bei einem Aus- oder Einfahren der Teleskoparme (2, 3) ohne Verstellung des Stellglieds (70) der mindestens eine Mitnehmer (231, 232, 233, 331, 332, 333) nicht in Richtung des gegenüberliegenden Mitnehmers (231, 232, 233, 331, 332, 333) verstellt wird, **dadurch gekennzeichnet, dass** mit dem Stellglied (70) eine am Tragteil (21, 31) verschiebbar gelagerte Verstell-Zahnstange (73) verschiebbar ist, die in ein Antriebstrum (741) eines Zahnriemens (74) oder einer Kette eingreift, der bzw. die um zwei drehbar am Mittelteil (22, 32) angebrachte Umlenkräder (75, 76) geführt ist, und ein dem Antriebstrum (741) gegenüberliegendes Verstelltrum (742) des Zahnriemens (74) bzw. der Kette in eine Mitnehmer-Zahnstange (77) eingreift, die am Innenteil (23, 33) verschiebbar gelagert ist, wobei durch eine Verschiebung der Mitnehmer-Zahnstange (77) relativ zum Innenteil (23, 33) der mindestens eine am Innenteil (23, 33) angeordnete Mitnehmer (231, 232, 233, 331, 332, 333) in Richtung des gegenüberliegenden Mitnehmers (231, 232, 233, 331, 332, 333) verstellbar ist.

2. Lastaufnahmevorrichtung (1) nach Anspruch 1, **dadurch gekennzeichnet, dass** die Mitnehmer (231, 232, 233, 331, 332, 333) jeweils schwenkbar an einem der Innenteile (23, 33) angeordnet sind und an einem zylindrischen Basisteil (2312, 2322, 2332) eine Spiralnut (2313, 2323, 2333) aufweisen, in die ein an der Mitnehmer-Zahnstange (77) angeordneter Mitnehmer-Stift (771, 772, 773) eingreift.

3. Lastaufnahmevorrichtung (1) nach Anspruch 1 oder 2, **dadurch gekennzeichnet, dass** an jedem der beiden Innenteile (23, 33) mindestens zwei Mitnehmer (231, 232, 233, 331, 332, 333) angeordnet sind, die mit demselben Stellmotor (7) verstellbar sind.

4. Lastaufnahmevorrichtung (1) nach einem der Ansprüche 1 bis 3, **dadurch gekennzeichnet, dass** am Mittelteil (22, 32) mindestens zwei Führungsrollen (221, 222, 223, 224) drehbar gelagert sind, die hintereinander kreuzweise angeordnet sind und am Tragteil (21, 31) anliegen, so dass sie für das Mittelteil (22, 32) eine Kreuzführung bilden.

5. Lastaufnahmevorrichtung (1) nach Anspruch 4, **dadurch gekennzeichnet, dass** jeweils mindestens zwei der Führungsrollen (221, 222, 223, 224) am Innenteil (23, 33) anliegen, so dass sie für das Innenteil (23, 33) eine Kreuzführung bilden.

6. Lastaufnahmevorrichtung (1) nach einem der Ansprüche 1 bis 5, **dadurch gekennzeichnet, dass** die beiden Teleskoparme (2, 3) an einem gemeinsamen Träger (6) angebracht sind, wobei das Tragteil (31) eines ersten der beiden Teleskoparme (3) bezüglich des Trägers (6) ortsfest ist und das Tragteil (21) des zweiten der beiden Teleskoparme (2) bezüglich des Trägers (6) in Richtung des Tragteils (31) des ersten Teleskoparms (3) verstellbar ist.

7. Lastaufnahmevorrichtung (1) nach einem der Ansprüche 1 bis 6, **dadurch gekennzeichnet, dass** sie zwischen den beiden Teleskoparmen (2, 3) mindestens zwei in Längsrichtung der Teleskoparme (2, 3) hintereinander angeordnete Förderbänder (51, 52, 53, 54) aufweist, die in Längsrichtung der Teleskoparme (2, 3) fördern und separat antreibbar sind.

8. Lastaufnahmevorrichtung (1) nach einem der Ansprüche 1 bis 7, **dadurch gekennzeichnet, dass** zwischen den beiden Teleskoparmen (2, 3) in Längsrichtung der Teleskoparme (2, 3) eine Rollenbahn (4) angeordnet ist, die vorzugsweise quer zu den Teleskoparmen (2, 3) verschiebbar ist, wobei die Verschiebung vorzugsweise so an eine Verstellung des gegenseitigen Abstands der beiden Teleskoparme (2, 3) gekoppelt ist, dass die Rollenbahn (4) immer in der Mitte zwischen den beiden Teleskoparmen (2, 3) ist.

9. Lastaufnahmevorrichtung (1) nach Anspruch 8, **dadurch gekennzeichnet, dass** beidseits der Rollenbahn (4) je zwei in Längsrichtung der Teleskoparme (2, 3) hintereinander angeordnete Förderbänder (51, 52, 53, 54) angeordnet sind, wobei die beiden vorderen Förderbänder (51, 53) und die beiden hinteren Förderbänder (52, 54) jeweils mit einem gemeinsamen Förderband-Motor (5) antreibbar sind.
